# EUROPEAN PATENT APPLICATION

(11) **EP 4 456 263 A1**
(43) Date of publication of application: **30.10.2024**
(21) Application number: 22911138.0
(22) Date of filing: 16.12.2022
(51) Int. Cl.: H01M 10/658, H01M 10/613, H01M 10/643, H01M 10/647, H01M 10/651, H01M 50/204, H01M 50/213

(54) **BATTERY PACK**

(30) Priority: 24.12.2021 JP 2021210534
(71) Applicant: Panasonic Holdings Corporation, Osaka 571-8501 (JP); Panasonic Energy Co., Ltd., Osaka 570-8511 (JP)
(72) Inventor: SHIMIZU Keisuke, Kadoma-shi, Osaka 571-0057 (JP); SAKAGAWA Yasuaki, Kadoma-shi, Osaka 571-0057 (JP); ISHIZAKA Katsushi, Kadoma-shi, Osaka 571-0057 (JP); ARIKAWA Hiroshi, Kadoma-shi, Osaka 571-0057 (JP); FUKUDA Shinsuke, Kadoma-shi, Osaka 571-0057 (JP)
(74) Representative: Novagraaf International SA
(86) International application number: PCT/JP2022/046500
(87) International publication number: WO 2023/120435

(57) **Abstract**

A battery pack includes a heat insulating member between adjacent cells, and a side surface member disposed in contact with side surfaces of the plurality of cells excluding a site including the heat insulating member, with thermal conductivity higher than the heat insulating member. When λa denotes thermal conductivity of the heat insulating member, and Ca denotes a product value of a specific heat and a density, 0.001 W / (m×K) < λa < 0.05 W / (m×K) and 0 < Ca < 2.5 J / (cm³×K) are satisfied. When λb denotes thermal conductivity of the side surface member, and Cb denotes a product value of a specific heat and a density, 0.1 W / (m×K) < λb < 1.0 W / (m×K) and 1.75 < Cb < 3.25 J / (cm³×K) are satisfied or 1.0 W / (m×K) < λb < 1000 W / (m×K) and 0.75 < Cb < 3.25 J / (cm³×K) are satisfied.

## Description

### Technical Field

The present disclosure relates to a battery pack.

### Background Art

In general, a cylindrical cell (battery) such as a cylindrical lithium-ion battery is used in a form of a battery pack in which a plurality of the cylindrical cells is electrically connect and housed in a case. At this time, if one of the cells thermally runs away due to some abnormality and generates heat abnormally, the heat generated by the cell that has thermally run away (thermally runaway cell) propagates to surrounding cells, causing a chain of thermal runaways in the surrounding cells, a thermal effect may occur on the outside of the battery pack. In order to use a battery pack safely, it is important to prevent such a chain of thermal runaways of cells.

Patent literature 1 discloses a battery pack including a case housing a plurality of cylindrical batteries (cells). Between the batteries adjacent to each other in the short direction of the case, a spacer is provided. The spacer includes a core body made of a thermally deformable resin and two sheet bodies provided on both side surfaces of the core body. The sheet bodies are formed of materials with higher thermal resistance than the core body.

### Citation List

### Patent Literature

[PTL 1] Japanese Unexamined Patent Application, Publication No. 2012-33464

### SUMMARY OF THE INVENTION

Examples of a method for preventing a chain of thermal runaways of cells include a method of reducing an amount of heat transferred from a thermally runaway cell to another cell by increasing a distance between adjacent cells in a battery pack. However, since this method increases a volume of the battery pack, there is room for improvement in terms of reduction in size of the battery pack. Furthermore, when a plurality of cells is adjacent to the thermally runaway cell, heat transfer from the thermally runaway cell is dispersed to the surrounding batteries, and the amount of heat transferred to one cell among the cells adjacent to the thermally runaway cell is reduced. On the other hand, when the number of cells adjacent to the thermal runaway cell is small, the amount of heat transferred to one cell among the cells adjacent to the thermal runaway cell increases.

Furthermore, as a configuration described in Patent literature 1, by only disposing thermally resistant members, there is room for improvement in terms of suppressing a chain of thermal runaways between adjacent cells.

An object of the present disclosure is to reduce in size of a battery pack and to enhance an effect of suppressing a chain of thermal runaway of cells.

A battery pack of the present disclosure is a battery pack including a battery block including a plurality of cells and housed in an outer covering case, or a part including an outer surface of the battery block forming the outer covering case, and including a heat insulating member provided between the cells adjacent to each other among the plurality of cells; a side surface member disposed in contact with a side surface of the plurality of cells excluding a site including the heat insulating member, with higher thermal conductivity than the heat insulating member, wherein the heat insulating member and the side surface member are made of different materials; 0.001 W / (m×K) < λa < 0.05 W / (m×K) and 0 < Ca < 2.5 J / (cm³×K) are satisfied where λa denotes thermal conductivity of the heat insulating member, and Ca denotes a product value of a specific heat and a density; and 0.1 W / (m×K) < λb < 1.0 W / (m×K) and 1.75 < Cb < 3.25 J / (cm³×K) are satisfied or 1.0 W / (m×K) < λb < 1000 W / (m×K) and 0.75 < Cb < 3.25 J / (cm³×K) are satisfied where λb denotes thermal conductivity of the side surface member, and Cb denotes a product value of a specific heat and a density.

According to the battery pack of the present disclosure, the heat insulating member is provided between the adjacent cells, and the side surface member whose thermal conductivity is higher than that of the heat insulating member is provided in contact with a side surface of the plurality of cells excluding a site provided with the heat insulating member. Furthermore, in the heat insulating member, the thermal conductivity is lower than the side surface member, and a product of a specific heat and a density is relatively small. Furthermore, in the side surface member, the thermal conductivity is higher than the heat insulating member, and the product of a specific heat and a density is relatively large. Thus, heat is easily stored in the side surface member and is easily dissipated to the surroundings without excessively increasing the distance between the cells. Thus, heat transfer from the abnormally heated thermally runaway cell to one of the cells adjacent to the thermally runaway cell can be reduced. Therefore, the effect of suppressing the chain of thermal runaways of the cells can be enhanced. Furthermore, since it is not necessary to make a space between the cells excessively large in order to suppress the chain of thermal runaways, a size of the battery pack can be reduced.

### BRIEF DESCRIPTION OF THE DRAWINGS

FIG. 1 is a schematic perspective view of a battery pack in accordance with one exemplary embodiment.
FIG. 2A is a perspective view of a battery block including two adjacent cells in the battery pack of FIG. 1.
FIG. 2B is a partially exploded perspective view showing a part of the battery block of FIG. 2A.
FIG. 3A is a cross-sectional view taken along line A-A of FIG. 1.
FIG. 3B is a view of FIG. 3A from which an outer covering case is omitted.
FIG. 4 is a diagram showing an applicable range of a thermal conductivity and a product of a specific heat and a density of each material of the heat insulating member and the side surface member in accordance with the exemplary embodiment.
FIG. 5 is a diagram corresponding to FIG. 3B of the battery block used for analyzing demonstrating the effect of the exemplary embodiment.
FIG. 6 is a diagram showing analysis results for evaluating the effect of suppression of thermal runaway of the cells when the heat conductivities λa and λb and the products Ca and Cb of a specific heat and a density are changed in materials (a heat insulating member material and a side surface member material) each forming each of the heat insulating member and the side surface member.
FIG. 7 is a view showing another example of the exemplary embodiment, corresponding to FIG. 3B.
FIG. 8 is a view showing another example of the exemplary embodiment, corresponding to FIG. 3B.
FIG. 9 is a perspective view showing a battery block in another example in the exemplary embodiment.
FIG. 10 is a sectional view taken along line B-B of FIG. 9.

### DESCRIPTION OF EMBODIMENT

The exemplary embodiment of the present disclosure is described with reference to drawings. The shapes, materials, directions, and numbers described below are examples, and can be appropriately modified in accordance with specifications of battery packs. Furthermore, component elements of the exemplary embodiments, modifications, and the like, mentioned below are expected to be selectively coupled from the beginning.

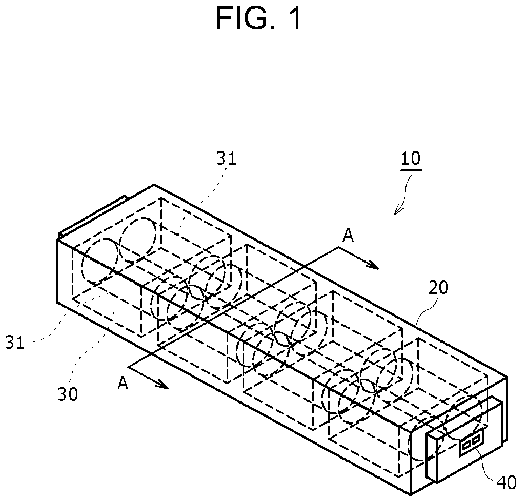

FIG. 1 shows a schematic configuration of battery pack 10. Battery pack 10 is used as a power source for devices driven by electric motors, for example, electric vehicles, power-assisted bicycles, and electric motorcycles. The application of use of battery pack 10 is not limited to this, and battery pack 10 can be used as a power supply for various electric devices.

Battery pack 10 includes outer covering case 20 made of metal such as aluminum, and one or a plurality of battery blocks 30 housed inside outer covering case 20.

Battery block 30 includes a plurality of cells 31 arranged in line, and the plurality of cells 31 is electrically connected to each other. Battery block 30 includes a plurality of cells 31, for example, electrically connected in parallel or in series. Battery pack 10 includes a plurality of battery blocks 30 electrically connected in series or in parallel to output a voltage suitable for devices to be used.

Cell 31 is, for example, a cylindrical battery. Note here that in this disclosure, although a cylindrical battery is described as an example of cell 31, a cell is not limited to the cylindrical battery, and may be a prismatic battery or the like.

Cell 31 is a cylindrical battery including a bottomed cylindrical outer can and a sealing body that closes an opening of the outer can. Furthermore, an insulating gasket is provided between the outer can and the sealing body. In a cylindrical battery, in general, the sealing body serves as a positive electrode terminal, and the outer can serves as a negative electrode terminal. The sealing body includes an exhaust valve for discharging gas when an abnormality occurs in cell 31 and the internal pressure rises. Note here that the exhaust valve may be provided at the bottom of the outer can.

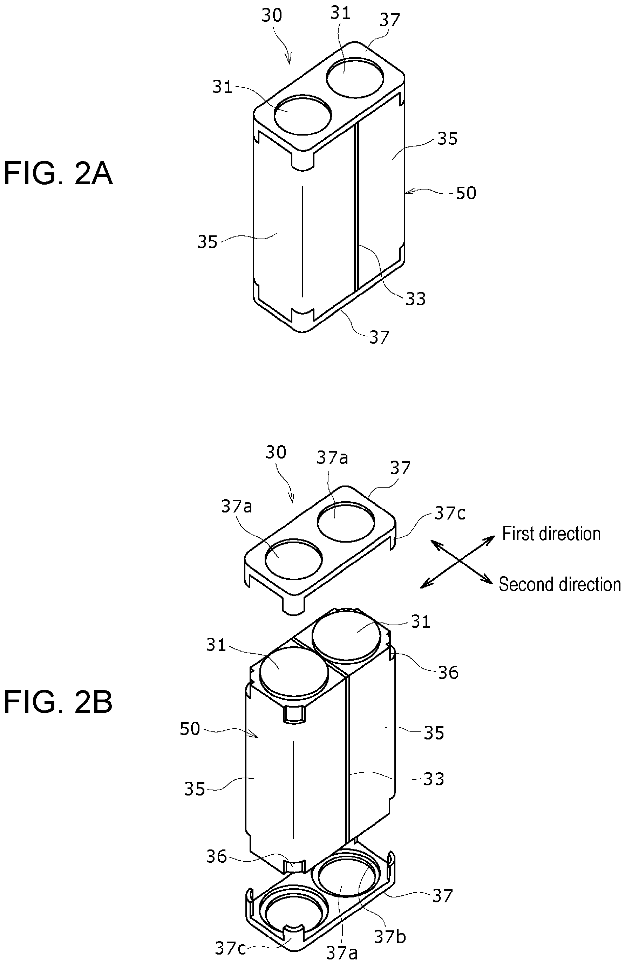

Battery block 30 includes a plurality of cells 31 housed in holder 50. Holder 50 of battery block 30 includes below-described heat insulating member 33 (FIGs. 2A and 2B) and two side surface members 35 (FIGs. 2A and 2B) with higher thermal conductivity than heat insulating member 33. Holder 50 fixes the arrangement of the plurality of cells 31 and maintains the form of battery block 30. Furthermore, battery pack 10 includes a terminal board (current collector board) for electrically connecting a plurality of battery blocks 30. The positive electrode terminal and the negative electrode terminal of battery block 30 are respectively connected to the terminal board. The terminal board and the holder may be integrated with each other.

External terminal 40 electrically connected to battery block 30 is provided at the end part of outer covering case 20. External terminal 40 is used as a terminal for applying a DC voltage to a device into which battery pack 10 is to be installed. Furthermore, external terminal 40 is used also in charging cells 31 of battery pack 10. External terminal 40 may be provided at only one end part of battery pack 10, or may be provided in a plurality of places. Furthermore, a part including the outer surface of the battery block and formed of the heat insulating member or the side surface member may form the outer covering case.

A structure of battery block 30 is described with reference to FIGs. 2A and 2B. As shown in FIGs. 2A and 2B, battery block 30 includes a plurality of cells 31, heat insulating member 33, two side surface members 35, and two position fixing members 37. In battery block 30, the plurality of cells 31 is disposed adjacent to each other in a first direction. The first direction is a direction perpendicular to the axial direction of each cell 31.

In battery block 30, heat insulating member 33 is disposed between two cells 31, and two side surface members 35 are disposed in contact with the side surfaces of two cells 31 excluding a site provided with heat insulating member 33. Heat insulating member 33 and two side surface members 35 are integrally fixed. Thereby, the side surfaces of two cells 31 are covered with heat insulating member 33 and two side surface members 35. Two position fixing members 37 are respectively disposed at both end parts in the axial direction of two cells 31, and two cells 31 are sandwiched by two position fixing members 37 from both sides in the axial direction. FIG. 2A shows a state in which battery block 30 is integrally fixed. FIG. 2B shows a state before position fixing members 37 are attached to two cells 31, heat insulating member 33, and side surface members 35.

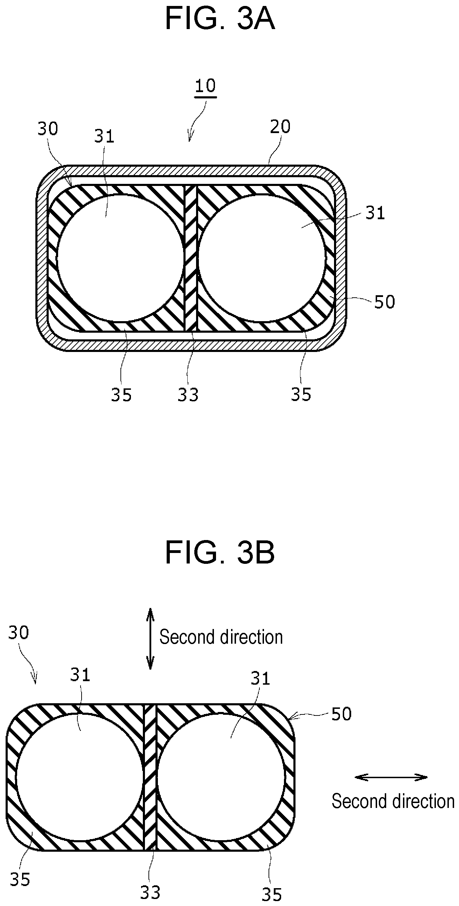

As shown in the below described FIGs. 3A and 3B, heat insulating member 33 is a flat plate disposed between two cells 31 so as to be in contact with two cells 31 only at a position where the distance between the cells is the shortest and sandwiched between the cylindrical-shaped side surfaces of cells 31. At this time, heat insulating member 33 is located in all positions in a second direction perpendicular to the first direction and the axial direction of cell 31 excluding both ends in the axial direction of cell 31, between adjacent cells 31, and blocks the adjacent two cells 31. Side surface member 35 is disposed to cover almost the entire side surface of each cell 31 excluding a part where heat insulating member 33 is not disposed. Heat insulating member 33 and two side surface members 35 form holder 50 that is substantially rectangular parallelepiped and holds two cells inside.

The length of holder 50 along the axial direction of cell 31 is formed to be smaller than the length of cell 31 in the axial direction. As shown in FIG. 2B, both end parts in the axial direction of cell 31 protrude from both end surfaces of holder 50 in the axial direction.

Two position fixing members 37 are in substantially rectangular flat and are disposed at both ends in the axial direction of two cells 31. Each position fixing member 37 includes two openings 37a in the positions corresponding to the end surfaces in the axial direction of two cells 31. At a position with which cell 31 is brought into contact in a peripheral edge part of opening 37a of each position fixing member 37, housing part 37b for housing the end part of cell 31 protruding from holder 50 is formed. Both end parts of cell 31 in the axial direction form electrode terminals. The electrode terminals of two cells 31 are electrically connected to current collector boards (not shown) through openings 37a of position fixing member 37.

At four corners of position fixing member 37, fitting claws 37c are formed. Fitting recesses 36 are formed in positions corresponding to fitting claws 37c in both ends of each side surface member 35 in the axial direction of cell 31. Two position fixing members 37 are coupled to two side surface members 35 from both end sides in the axial direction of cell 31 so that fitting claws 37c are fitted into fitting recesses 36. In this state, end parts of cells 31 are housed in housing parts 37b. Thus, battery block 30 is formed.

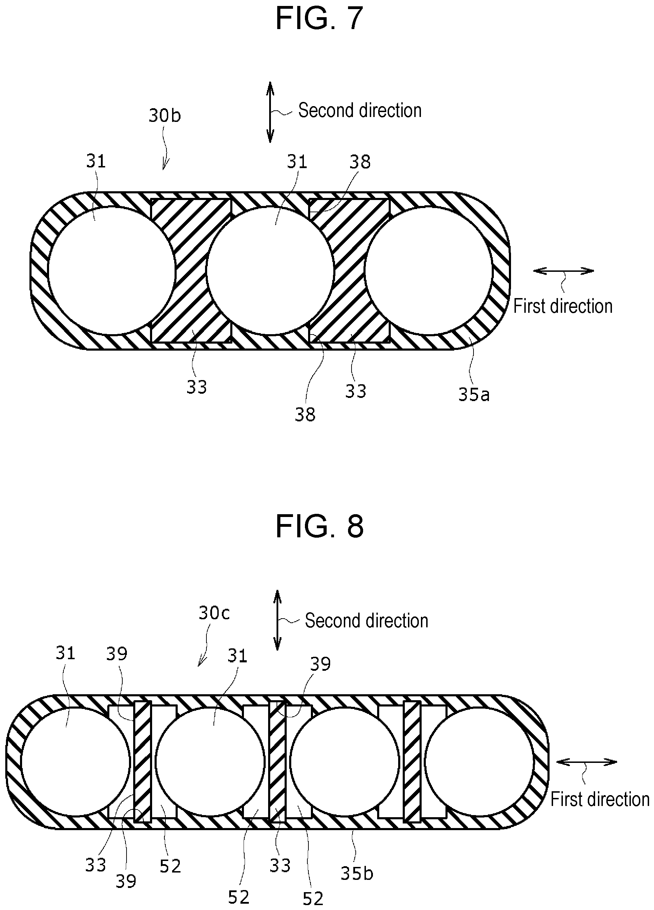

The number of cells 31 of battery block 30 is not two, and may be three or more as shown in FIGs. 7 to 10. FIGs. 2A and 2B show a configuration of battery block 30 including position fixing members 37 in both end parts in the axial direction of cell 31. However, the battery block may include heat insulating member 33 and side surface member 35 without including a position fixing member.

A heat transmitting structure of cells 31 in the battery pack 10 of the present disclosure is described with reference to FIGs. 3A and 3B. FIG. 3A is a sectional view taken along the line A-A of FIG. 1. FIG. 3B is a view in which outer covering case 20 is omitted from FIG. 3A.

In battery pack 10 of the present disclosure, heat insulating member 33 with low heat conductive property is disposed between two cells 31. Heat insulating member 33 is made of, for example, materials including foamed resin, heat insulating resin, foamed concrete, gypsum board, glass wool, or silica aerogel. The physical properties of the material forming heat insulating member 33 is described later in detail. Heat insulating member 33 makes it difficult for the heat generated in one cell 31 to be transmitted to other adjacent cells 31. Side surface member 35 with higher thermal conductivity than that of heat insulating member 33 is disposed in contact with the side surface of cell 31 that is not in contact with heat insulating member 33.

Side surface member 35 is made of, for example, a high heat conductive material including a thermosetting resin and a heat conductive filler. The physical properties of the materials forming side surface member 35 are described later in detail. As mentioned above, the heat generated in cell 31 is not easily transferred to other cells 31 adjacent to each other by heat insulating member 33, and is easily transmitted to side surface member 35 with high thermal conductivity.

As the resin forming side surface member 35, a thermosetting resin is preferable, but a thermoplastic resin may be used. Examples of the resin forming side surface member 35 include thermosetting resins such as unsaturated polyester, epoxy resin, melamine resin, phenol resin, thermoplastic polycarbonate, polyethylene, polypropylene, polyvinyl chloride, and polystyrene, and thermoplastic resin such as polycarbonate, polyethylene, polypropylene, polyvinyl chloride, and polystyrene.

The resin forming side surface member 35 may include a heat conductive filler formed of metal oxide (for example, aluminum oxide, zinc oxide), metal nitride (for example, aluminum nitride, boron nitride), and metal oxynitride (for example, aluminum oxynitride), or an endothermic filler formed of aluminum hydroxide, magnesium hydroxide, and sodium bicarbonate, as necessary.

Battery block 30 is housed in outer covering case 20 so that at least a part of side surface member 35 is in contact with the inner surface of outer covering case 20. The heat generated in cell 31 is easily transmitted to and absorbed by side surface member 35, and the heat absorbed by side surface member 35 is easily transmitted to outer covering case 20. The heat transmitted to outer covering case 20 is radiated to the outside.

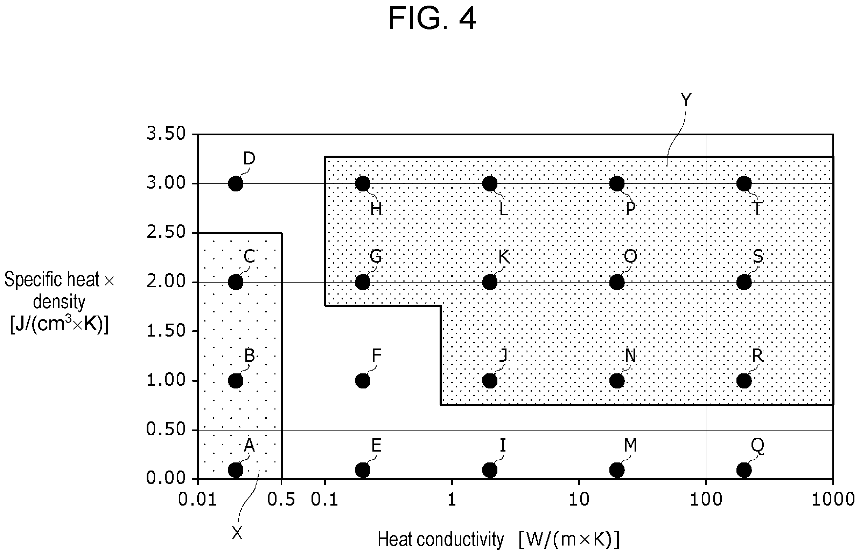

Next, physical properties of heat insulating member 33 and side surface member 35 are described with reference to FIG. 4. FIG. 4 is a diagram showing an applicable range of the thermal conductivity and a product of a specific heat and a density of each material of heat insulating member 33 and side surface member 35 in accordance with the exemplary embodiment. In FIG. 4, the horizontal axis represents thermal conductivity, and the vertical axis represents the product of a specific heat and a density. The product of the specific heat and the density corresponds to the heat capacity per unit volume.

A range X shown by a thin dotted area of FIG. 4 indicates a range of the physical property values of the material used for heat insulating member 33 of this exemplary embodiment. A range Y shown by a thick dotted area of FIG. 4 indicates a range of physical property values of the material used for side surface member 35. As shown in FIG. 4, different materials are used for heat insulating member 33 and side surface member 35. Black points A to T in FIG. 4 indicate virtual materials.

In this exemplary embodiment, when the thermal conductivity of heat insulating member 33 is denoted by λa, and the product value of a specific heat and a density is denoted by Ca, λa and Ca satisfy 0.001 W / (m×K) < λa < 0.05 W / (m×K), and 0 < Ca < 2.5 J / (cm³×K), corresponding to the range X. Furthermore, in the exemplary embodiment, when thermal conductivity of side surface member 35 is denoted by λb, and a product value of a specific heat and a density is denoted by Cb, λb and Cb satisfy 0.1 W / (m×K) < λb < 1.0 W / (m×K) and 1.75 < Cb < 3.25 J / (cm³×K), or satisfy 1.0 W / (m×K) < λb < 1000 W / (m×K) and 0.75 < Cb < 3.25 J / (cm³×K), corresponding to a range Y

For example, for materials of heat insulating member 33 of the exemplary embodiment, any one of the virtual materials A to C included in the range X can be used. Furthermore, for materials of side surface member 35 of the exemplary embodiment, any one of the virtual materials A to T included in the range Y can be used.

According to battery pack 10 mentioned above, heat insulating member 33 is provided between adjacent cells 31, and side surface member 35 whose thermal conductivity is higher than that of heat insulating member 33 is provided in contact with a side surface, excluding a site provided with heat insulating member 33, of the plurality of cells 31. Furthermore, in heat insulating member 33, the thermal conductivity is lower than that of side surface member 35, and the product of a specific heat and a density is relatively small. Furthermore, in side surface member 35, the thermal conductivity is higher than that of heat insulating member 33, and the product of a specific heat and a density is relatively large. Thus, heat is easily stored in side surface member 35 and is easily dissipated to the surroundings without excessively increasing the distance between the cells. Thus, heat transfer from an abnormally heated thermally runaway cell to one of cells 31 adjacent to the thermally runaway cell can be reduced. As a result, the effect of suppressing the chain of thermal runaways of cells 31 can be enhanced. Furthermore, since it is not necessary to make a space between the cells excessively large in order to suppress the chain of thermal runaways, a size of battery pack 10 can be reduced.

Furthermore, since heat insulating member 33 is located at all positions in the second direction at least in part in the axial direction of cells 31 between adjacent cells 31, adjacent cells 31 are completely blocked at least in part in the axial direction. Thus, the effect of suppressing the chain of thermal runaway of cells 31 can be further enhanced.

Next, results of analysis performed to check the effect of the exemplary embodiment are described. In the analysis, a thermal fluid simulation was performed to evaluate the heat transfer from the thermal runaway cell to adjacent cell 31. Hereinafter, a cell disposed adjacent to a thermal runaway cell may be referred to as an "adjacent cell."

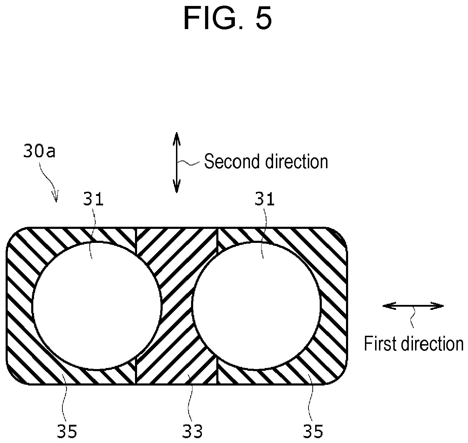

In the analysis, battery block 30a with the sectional structure shown in FIG. 5 was used. In the structure of FIG. 5, as compared with the structure shown in FIGs. 3A and 3B, the width of heat insulating member 33 in the first direction is larger. Heat insulating member 33 is disposed between two cells 31 and is in contact with a circular arc cross sectional area of the side surface of each cell 31 including the position other than the position where the distance between the cells is the shortest. Side surface member 35 is disposed to cover almost the entire side surface of each cell 31 excluding a part where heat insulating member 33 is not disposed. Other configurations of battery block 30a shown in FIG. 5 are similar to those of battery block 30 shown in FIGS. 3A and 3B.

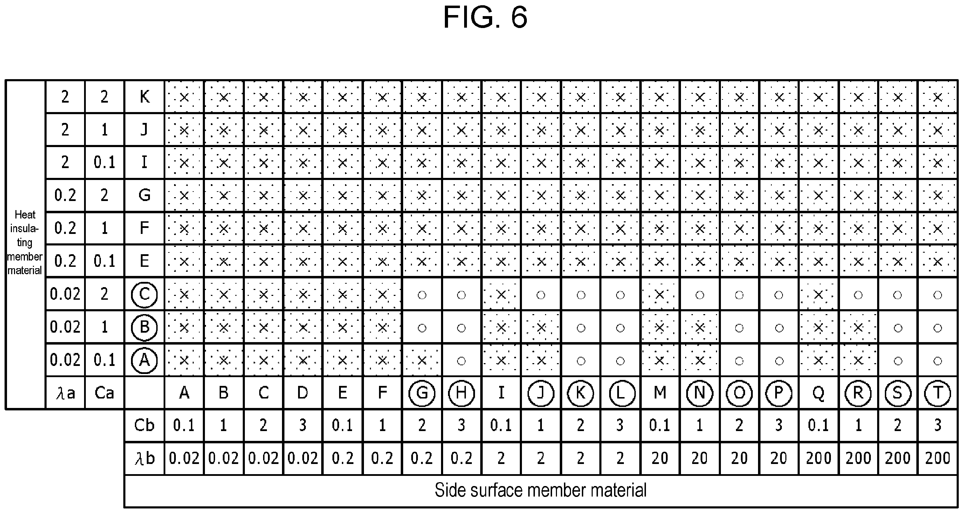

FIG. 6 shows analysis results of evaluation of the suppression effect of the thermal runaway of cells 31 in a case where heat conductivities λa and λb, and products of a specific heat and a density Ca and Cb are varied in materials (heat insulating member material and side surface member material) forming each of heat insulating member 33 and side surface member 35. Vertical columns in FIG. 6 show virtual materials A to K to be used as heat insulating member materials and their respective heat conductivities λa, and (specific heat × density) Ca. Horizontal columns of FIG. 6 show virtual materials A to T to be used as side surface member materials and their respective heat conductivities λb and (specific heat × density) Cb. In the columns of virtual materials A to T in FIG. 6, the circled characters indicate materials applicable to heat insulating member 33 or side surface member 35 in the exemplary embodiment.

Furthermore, in the analysis, one of two adjacent cells 31 shown in FIG. 5 is assumed to be a thermally runaway cell and the other is assumed to be an adjacent cell, and the initial temperature of two cells 31 is a predetermined temperature that can be assumed based on the usage environment and the form of the battery pack. Furthermore, the cell size of each cell 31 is set to 18 mm in diameter and 65 mm in height (length in the axial direction). Furthermore, the shortest distance between adjacent cells 31 is set to 1 mm. Then, assuming that the thermally runaway cell generates heat with a predetermined value of heat, a simulation was performed to calculate the temperature rise of the adjacent cell.

The table in FIG. 6 shows the results of the analysis mentioned above, and "X" in the table indicates that the maximum temperature of the adjacent battery in analysis exceeds a predetermined temperature Tmax as the heat resistance temperature of cell 31 in the combination of the corresponding heat insulating member material and side surface member material and that the effect of suppressing the thermal runaway is insufficient. Furthermore, "O" in the table of FIG. 6 indicates that the maximum temperature of the adjacent cell in the analysis is a predetermined temperature Tmax or less in the combination of the corresponding heat insulating member material and side surface member material and that the suppression effect of the thermal runaway is sufficient.

As is apparent from comparison between O and X in FIG. 6, it was demonstrated that the effect of suppressing the chain of the thermal runaway was good when the virtual materials A to C included in the applicable range (the range X of FIG. 4) of the exemplary embodiment are used as the heat insulating member material and when the virtual materials G, H, J, K, L, N, O, P, R, S, and T included in the applicable range (the range Y of FIG. 4) of the exemplary embodiment are used as the side surface member material.

The above analysis was performed using battery block 30a with the sectional structure shown in FIG. 5, but the similar analysis results can be obtained using battery block 30 with the sectional structure shown in FIG. 3B. This demonstrated the effect of the exemplary embodiment.

Furthermore, in the above analysis, battery block 30a includes two cells. On the other hand, as shown in the other example described later, the similar analysis results can be obtained by a configuration in which three or four cells 31 are disposed in the first direction or a configuration in which cells 31 are arranged in two rows in the second direction and each row includes two or three cells 31 in the first direction.

In the above analysis, the shortest distance between adjacent cells 31 is set to 1 mm, but the similar analysis results can be obtained when the shortest distance is, for example, in a range from 0.3 mm to 3 mm, other than 1 mm.

Furthermore, in the above analysis, the diameter of cell 31 is set to 18 mm, but the similar analysis result can be obtained when the diameter is, for example, in a range from 16 mm to 50 mm, other than 18 mm.

Furthermore, in the above analysis, the similar analysis results are obtained as long as the maximum length of heat insulating member 33 in the first direction is in a range from 0.3 mm to 10 mm. Furthermore, in the above analysis, similar analysis results can be obtained if the volume energy density of cell 31 exceeds 550 Wh/L.

FIG. 7 is a view showing another example of the exemplary embodiment corresponding to FIG. 3B. In the configuration of this example, battery block 30b includes three cells 31 disposed adjacent to each other in the first direction, two heat insulating members 33 provided between cells 31, and side surface member 35a that is in contact with the side surface of cell 31 so as to surround the periphery of the side surfaces of three cells 31. The shape of each heat insulating member 33 is similar to that in the case of battery block 30a of FIG. 5. Side surface member 35a is formed in a flat annular shape that is oblong in the first direction. Two heat insulating members 33 are coupled to be fitted into fitting grooves 38 formed on the inner circumference of side surface member 35a. Thus, side surface member 35a is formed in an annular shape with heat insulating member 33 disposed inside. Other configurations and actions in this example are similar to those in FIGs. 1 to 4.

FIG. 8 is a view showing another example of the exemplary embodiment corresponding to FIG. 3B. In the configuration of this example, battery block 30c includes four cells 31 disposed adjacent to each other in the first direction, three heat insulating members 33 provided between cells 31, and side surface member 35b that is in contact with the side surface of cell 31 so as to surround the periphery of the side surfaces of four cells 31. The shape of each heat insulating member 33 is similar to the case of battery block 30a of FIG. 5. Both end parts in the second direction of each heat insulating member 33 are coupled to be fitted into fitting grooves 39 formed on the inner circumference of side surface member 35b.

Side surface member 35b is not brought into contact with heat insulating member 33 in a place other than fitting grooves 39. At the inside of side surface member 35b, an air layer is formed between both side surfaces in the first direction of heat insulating member 33 and side surface member 35b. Thus, air layer 52 is formed between the adjacent cells. In FIG. 8, heat insulating member 33 and the side surface of cell 31 are apart from each other, but the side surface of cell 31 may be in contact with heat insulating member 33. In this example, the other configuration and actions are similar to the configurations of FIGs. 1 to 4 or configuration of FIG. 7.

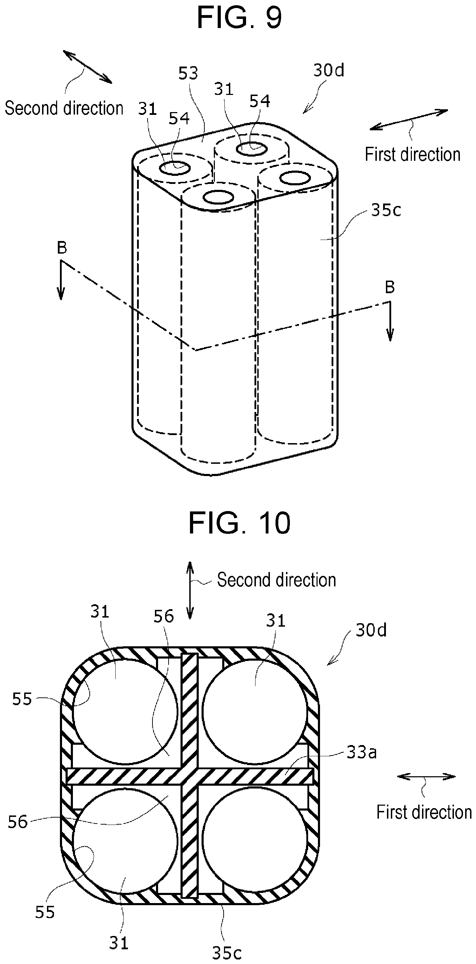

FIG. 9 is a perspective view showing battery block 30d in another example in the exemplary embodiment. FIG. 10 is a sectional view taken along line B-B of FIG. 9. In the configuration of this example, battery block 30d includes four cells 31 held at the inside of side surface member 35c that is in a substantially square cylindrical shape and that includes lid parts 53 at the both ends in the axial direction. Four cells 31 are arranged in two rows in the second direction and each row includes two cells 31 arranged in the first direction. Openings 54 for exposing the electrode terminals of cells 31 are formed in lid parts 53 of side surface member 35c.

Furthermore, as shown in FIG. 10, a side surface of cell 31 is fitted into and held by each fitting recess 55 with a circular arc cross sectional shape formed in four corners on the inner peripheral surface of side surface member 35c. Heat insulating member 33a with a shape in which two plate parts are orthogonal to each other seen in a cross section is held on the inner peripheral surface of side surface member 35c. Heat insulating member 33a extends between adjacent cells 31 and blocks a place between the cells. Air layer 56 is formed between the adjacent cells in the first direction and the second direction. In FIG. 10, heat insulating member 33a and side surface of cell 31 are distant from each other, but the side surface of cell 31 may be brought into contact with heat insulating member 33a. Other configurations and actions in this example are similar to the configurations in FIGs. 1 to 4, or FIG. 7, or FIG. 8.

Note here that the present disclosure is not limited to the above-described exemplary embodiments and modifications thereof, and it goes without saying that various modifications and improvements are possible within the scope of the matters described in claims of the present application.

### REFERENCE MARKS IN THE DRAWINGS

10: battery pack, 20: outer covering case, 30, 30a to 30d: battery block, 31: cell (battery), 33,33a: heat insulating member, 35, 35a, 35b, 35c: side surface member, 36: fitting recess, 37: position fixing member, 37a: opening, 37b: housing part, 37c: fitting claw, 38, 39: fitting groove, 40: external terminal, 50: holder, 52: air layer, 53: lid part, 54: opening, 55: fitting recess, 56: air layer

## Claims

1. A battery pack comprising
a battery block including a plurality of cells, and housed in an outer covering case, or a part including an outer surface of the battery block forming an outer covering case, and comprising:
a heat insulating member provided between cells adjacent to each other among the plurality of cells;
a side surface member disposed in contact with a side surface of the plurality of cells excluding a site including the heat insulating member, with a higher thermal conductivity than a thermal conductivity of the heat insulating member,
wherein the heat insulating member and the side surface member includes different materials each other;
0.001 W / (m×K) < λa < 0.05 W / (m×K) and 0 < Ca < 2.5 J / (cm³×K) are satisfied where λa denotes thermal conductivity of the heat insulating member, and Ca denotes a product value of a specific heat and a density; and
0.1 W / (m×K) < λb < 1.0 W / (m×K) and 1.75 < Cb < 3.25 J / (cm³×K) are satisfied or 1.0 W / (m×K) < λb < 1000 W / (m×K) and 0.75 < Cb < 3.25 J / (cm³×K) are satisfied where λb denotes thermal conductivity of the side surface member, and Cb denotes a product value of a specific heat and a density.

2. The battery pack according to claim 1, wherein
the cells adjacent to each other are disposed adjacent to each other in a first direction, and
the heat insulating member is positioned between the cells adjacent to each other in all positions in a second direction perpendicular to the first direction in at least a part along the axis.

3. The battery pack according to claim 2,
wherein the heat insulating member is disposed between the cells adjacent to each other, and sandwiched by the plurality of side surface members.

4. The battery pack according to claim 1 or 2,
wherein the side surface member is in an annular shape with the heat insulating member disposed inside.

5. The battery pack according to any one of claims 1 to 4,
wherein the battery pack includes an air layer between the cells adjacent to each other.

6. The battery pack according to any one of claims 1 to 5,
wherein a shortest distance between the cells adjacent to each other is 0.3 mm to 3.0 mm.
